# EUROPEAN PATENT APPLICATION

(11) **EP 2 154 259 A1**
(43) Date of publication of application: **17.02.2010**
(21) Application number: 08776951.9
(22) Date of filing: 28.05.2008
(51) Int. Cl.: C22C 29/04, B23B 27/14

(54) **CERMET**

(30) Priority: 28.05.2007 JP 2007140577
(71) Applicant: Kyocera Corporation, Kyoto-shi Kyoto 612-8501 (JP)
(72) Inventor: TOKUNAGA, Takashi, Satsumasendai-shi Kagoshima 895-0292 (JP)
(74) Representative: HOFFMANN EITLE
(86) International application number: PCT/JP2008/059836
(87) International publication number: WO 2008/146856

(57) **Abstract**

There is provided a cermet excellent thermal shock resistance and fracture resistance. The cermet (1) is formed by binding hard particles (2) comprising one or more kinds of substances selected from carbides, nitrides and carbonitrides selected from among metals in Groups 4, 5 and 6 of the periodic table, with a binder phase (3) comprising at least one kind of element selected from Co and Ni, wherein there exists a joint portion (6) where the hard particles (2) are joined with each other by forming a neck portion (4) through a binder phase layer (5) having a thickness of 0.1 to 3 nm.

## Description

### TECHNICAL FIELD

The present invention relates to a cermet having both toughness and hardness suitable for cutting tool members, wear-resistant tool members, and the like.

### BACKGROUND ART

Cermets frequently used as an alloy for the wear-resistant tools or cutting tools are those having a structure in which hard particles composed mainly of TiCN are bound together by a binder phase of Co or Ni. These cermets are known as those having the structure in which hard particles are bound together by the binder phase. For example, patent document 1 describes the cermet having the structure made by distributing crystal particles of interstitial metal carbide into a binder phase, in order to enhance the wear resistance of the cermet by reinforcing the binder phase having a low hardness.

The following is known as other structure of conventional cermets. That is, a hard phase constitutes a so-called skeletal structure of hard particles in which these hard particles are continuously joined together, and a binder phase exists to fill the voids in the skeletal structure of the hard phase. In this skeletal structure, no binder phase intervenes in a joint portion between the hard particles. Consequently, the cermet is fragile due to lack of crack propagation resistance. When the cermet is used as a cutting tool, fracture has occurred during cutting under severe cutting conditions. Therefore, patent document 2 employs the manufacture of a formed body by using, as a raw material powder, a raw material powder for hard particles whose surfaces are coated with a binder phase, and by using a forming method, such as cold isostatic press (CIP) method requiring no mixing step and having less directivity subjected to pressure, or press forming method under controlled conditions. This produced the formed body causing no separation of the coated binder phase layer into the raw material powder. This document describes that the sintered body in which the binder phases exist uniformly around the hard particles was obtained by firing the formed body, and hence bending strength improvement and tool life improvement in intermittent cutting were observed.
Patent document 1: Japanese Unexamined Patent Application Publication No. 11-50181
Patent document 2: Japanese Unexamined Patent Application Publication No. 4-157132

### DISCLOSURE OF THE INVENTION

### PROBLEMS TO BE SOLVED BY THE INVENTION

However, the cermets as described in the patent documents 1 and 2 have difficulties in sintering between the hard particles, and the growth of neck portions might be hindered. In this case, these cermets have low hardness and low plastic deformation resistance, and hence offer poor wear resistance and poor fracture resistance when used for cutting tools. Conversely, if the sintering between the hard particles proceeds and the neck portions grow, this will produce a fragile skeletal structure in which the neck portions are continuously joined together by the hard particles, and hence the cermets have poor fracture resistance.

In the light of the above problems, the object of the present invention is to improve the plastic deformation resistance and fracture resistance of cermets.

### MEANS FOR SOLVING THE PROBLEMS

The cermet of the present invention is formed by binding hard particles comprising one or more kinds of substances selected from carbides, nitrides and carbonitrides selected from among metals in Groups 4, 5 and 6 of the periodic table, with a binder phase comprising at least one kind of element selected from Co and Ni, and there exists a portion where the hard particles are joined with each other by forming a neck portion through a binder phase layer having a thickness of 0.1 to 3 nm.

In the above structure, the ratio (L_{ct/}Lₚ) of a total length L_{ct} of the binder phase layer intervening the neck portion to a total outer circumferential length Lₚ of a plurality of the hard particles observed in a micrograph of a cross-sectional structure thereof is 0.1 or more.
Further in the above structure, the hard particles preferably have an average particle diameter of 0.1 to 0.9 µm. Additionally, TiN fine particles preferably exist in the interior of the hard particles. In the above structure, it is preferable to contain Ru or Re in a proportion of 0.1 to 5% by mass. It is also preferable to contain an amount of 0.5 to 1% by mass of Mn in a binder phase, and an amount of 0.004 to 0.01% by mass of Mn in a hard phase.

### EFFECT OF THE INVENTION

In accordance with the cermet of the invention, there exists the portion where the hard particles are joined with each other by forming the neck portion through the binder phase layer having a thickness of 0.1 to 3 nm. This achieves high plastic deformation resistance, and enhances fracture resistance.

Here, both the plastic deformation resistance and the toughness of the cermet can be retained high by setting the ratio (L_{ct/}Lₚ) to 0.1 or more, where L_{ct} denotes the total length of the binder phase layer intervening the neck portion, and Lₚ denotes the total outer circumferential length of a plurality of the hard particles observed in the micrograph of a cross-sectional structure thereof.

It is preferable in the interest of higher hardness of the cermet that the average particle diameter of the hard particles be 0.1 to 0.9 µm.

It is also preferable in the interest of further enhancement of the toughness of the cermet that TiN fine particles exist in the interior of the hard particles.

It is also preferable to contain Ru or Re in a proportion of 0.1 to 5% by mass. This reinforces the binder phase and thereby to reduce crack propagation. Additionally, the dislocation generated in the joint state of the hard particles can be minimized even at high temperature. Consequently it is capable of enhancing plastic deformation resistance and fracture resistance.

Further in accordance with the cermet of the invention, Mn may be contained instead of part or all of Ru or Re. In the interest of improved toughness of the cermet, it is preferable to contain an amount of 0.5 to 1% by mass of Mn in the binder phase, and an amount of 0.004 to 0.01% by mass of Mn in the hard phase.

### PREFERRED EMBODIMENTS FOR CARRYING OUT THE INVENTION

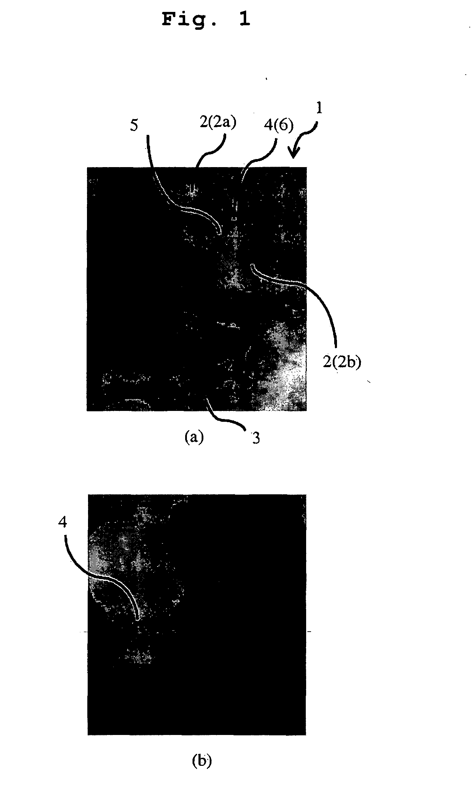

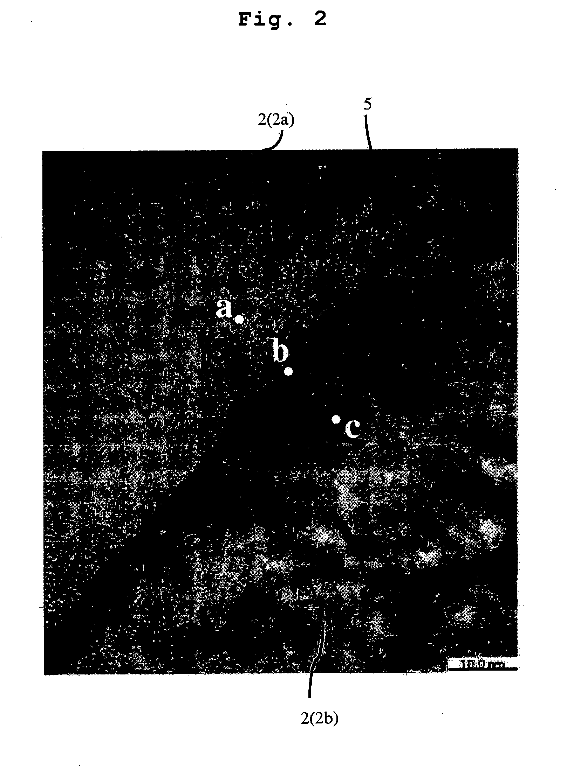

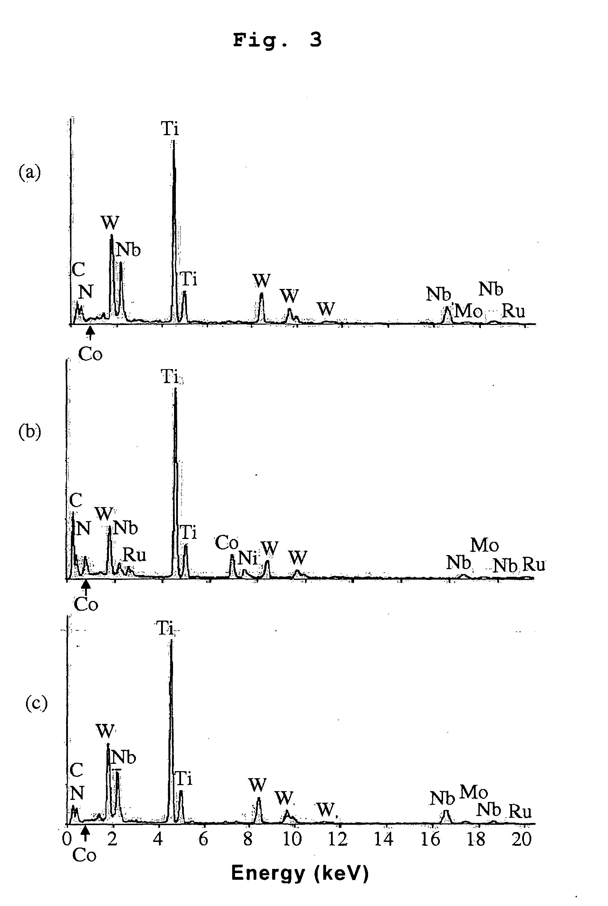

The cermet of the invention (hereinafter referred to simply as "cermet") will now be described based on Fig. 1(a) that is the transmission electron micrograph (TEM image) of the arbitrary portion. Fig. 1(b) is the transmission electron micrograph (TEM image) of an example of conventional cermets. Fig. 2 is an enlarged photograph of important parts of Fig. 1(a). Figs. 3(a) to 3(c) are the charts showing the composition analysis results by dispersive X-ray spectroscopic analysis with respect to point a, point b, and point c in Fig. 2.

Referring to Figs. 1(a) to Fig. 3, the cermet 1 of the invention is formed by binding hard particles 2 composed of one or more kinds of substances selected from carbides, nitrides and carbonitrides selected from among metals in Groups 4, 5 and 6 of the periodic table, with a binder phase 3 composed of at least one kind of element selected from Co and Ni. Further, there exists a portion (hereinafter referred to as a "joint portion 6") where the hard particles 2 are joined with each other by forming a neck portion 4 through a binder phase layer 5 having a thickness of 0.1 to 3 nm.

This creates a strong joint between the hard particles 2, and also high shock absorbing ability between the hard particles 2. Consequently, the cermet 1 has high hardness and high plastic deformation resistance, and the fracture resistance thereof can be enhanced.

That is, when the neck portion 4 is not formed due to a poor joint state between the hard particles 2, the hardness and the plastic deformation resistance of the cermet 1 are deteriorated. When no binder phase layer 5 exists in the neck portion 4, or when the binder phase layer 5 exists, however, the thickness thereof is smaller than 0.1 nm, the neck portion 4 has weak shock absorbing ability. Inversely, when the thickness of the binder phase layer 5 is larger than 3 nm, the hardness of the cermet 1 is deteriorated and the wear resistance thereof is deteriorated. When subjected to a force at high temperatures, a dislocation may occur in the joint state between the hard particles 2, so that the surface of the cermet 1 may be subjected to plastic deformation.

As used herein, the term "neck portion 4" in the present invention denotes the portion in a smaller particle 2 (2a) between the adjacent hard particles 2 (2a and 2b in Fig. 1(a)), in which the ratio (L_{c}/Lₐ) of a length L_{c} to a length Lₐ is 0.3 or more, where Lₐ denotes a maxim segment length that can be drawn within the hard particle 2 (2a) (Hereinafter referred to as a "major axis." Lₐ and L_{b} denote the major axes of the hard particles 2a and 2b, respectively, and satisfy the relationship Lₐ<L_{b}.), and L_{c} denotes a contact length between the hard particles 2 (2a and 2b). As to whether the binder phase layer 5 exists in the neck portion 4, the neck portion 4 is enlarged and observed through a microscope as shown in Fig. 2, and the composition of the position of the binder phase layer 5 (the point b) is measured by an energy dispersive X-ray analysis (EDS) annexed to the transmission electron microscope (TEM), as shown in Figs. 3. In this case, the peak intensity of the binder phase of Co or Ni becomes higher than that of the compositions at positions of the hard particles 2 (the point a, and the point c), thus making it possible to confirm whether or not the binder phase layer 5 exists. In the composition analysis with respect to the point b, because the analyzing region thereof is narrow, the ingredient of the hard particle 2 adjacent to the binder phase layer 5 is also detected.

It is also apparent from Figs. 3 that more Ru exist in the binder phase layer 5 at the point b than the hard particle 2 at the point a, or the point c. Consequently, the binder phase layer 5 is less liable to be deformed even if it is reinforced and has a high temperature, thus contributing to the plastic deformation resistance of the cermet 1.

Here, the ratio of the total length L_{ct} of the binder phase layer intervening the neck portion 4 to the total outer peripheral length Lₚ of a plurality of hard particles 2 observed in the micrograph of the cross-sectional structure (the ratio L_{ct}/Lₚ) is 0.1 (10%) or more, preferably 0.3 to 0.5 (30 to 50%). This is preferable in view of the fact that both the hardness and the toughness of the cermet 1 can be maintained. In the present invention, measurements are made on arbitrary ten hard particles 2 existing in a micrograph. Specifically, the micrograph is taken at such magnification that permits observation of about 10 to 15 hard particles 2. With respect to arbitrary ten hard particles 2 existing on the micrograph, the total outer peripheral length Lₚ of these ten hard particles 2 is calculated. With respect to the hard particles 2 forming the neck portion 4 together with the adjacent hard particles, the neck portion 4 is enlarged and observed through the microscope, and it is confirmed whether the binder phase layer 5 exists or not.

Preferably, the average particle diameter of the hard particles 2 is 0.1 to 0.9 µm in the interest of higher hardness of the cermet 1.

The toughness of the cermet 1 can be further enhanced by the presence of TiN fine particles (not shown) within the interior of the hard particles 2.

By incorporating Ru or Re in a proportion of 0.1 to 5% by mass into the cermet 1, the binder phase can be reinforced thereby to reduce crack propagation, and the dislocation generated in the joint state of the hard particles can be minimized even at high temperature. It is therefore capable of improving plastic deformation resistance and fracture resistance.

Even if Mn is contained instead of part or all of Ru or Re, the plastic deformation resistance and fracture resistance of the cermet can be improved. In this case, the content of Mn in the binder phase is preferably 0.5 to 1% by mass, and that in the hard phase is preferably 0.004 to 0.01% by mass. This improves the sintering properties of the cermet. Additionally, the hardness thereof is improved while retaining the toughness thereof. For example, if used as a cutting tool, the wear resistance required for the cutting tool is improved.

In this case, when the content of the binder phase 3 is not less than 5% by mass, the cermet 1 has good toughness and high fracture resistance. When the content of the binder phase 3 is not more than 15% by mass, the cermet 1 has high wear resistance and high plastic deformation resistance. Hence, the content percentage of the binder phase 3 is preferably 5 to 15% by mass.

In the cross-sectional structure observation through the microscope, at least part of the hard particles 2 is preferably turned into core-containing structure particles composed of a core part and a peripheral part. The hard particles 2 turned into the core-containing structure particles have particle growth control effect, and therefore the cermet 1 becomes a fine and uniform structure. Additionally, their excellent wettability against the binder phase 3 contributes to higher intensity of the cermet 1.

The carbon content within the cermet 1 is preferably 6 to 9% by mass, particularly 6.5 to 7.5% by mass, with the aim of improving hardness and thermal shock resistance, and achieving excellent surface state.

The cermet of the present invention is applicable to various kinds of purposes, for example, cutting tools, mining tools, and tools such as knives. The cermet exhibits the above excellent effects particularly when used for cutting tools to perform cutting by pressing a cutting edge formed at a cross ridge portion between a rake face and a flank face, against a work material. Of course, excellent mechanical reliability is ensured even for any other purposes.

### <Manufacturing Method>

A method of manufacturing the cermet of the present invention will now be described.

Firstly, raw material powders are blended and mixed together.

As raw material powder, a mixed powder is prepared by mixing TiCN powder; at least one kind of raw material powder selected from carbide powder, nitride powder and carbonitride powder containing one or more kinds of metal elements selected from W, Mo, Ta, V and Nb; and at least one of Co powder and Ni powder.

On this occasion, the average particle diameters of these individual raw material powders according to micro-track method are preferably as follows. That is, the average particle diameter of the TiCN powder is not more than 2 µm, particularly 0.05 to 1.5 µm. The average particle diameter of the Co powder and/or the Ni powder is not more than 2 µm, particularly 0.05 to 1.5 µm. This enhances the sintering properties of the cermet. It is further preferable to use, as binder metal raw material powder, solid solution powder containing Co and Ni in a predetermined ratio, with the aim of further enhancing the sintering properties. The average particle diameter of other raw material powder is preferably 0.05 to 3 µm.

A binder is then added to the above mixed powder and formed into a predetermined shape by any known forming method such as press forming, extrusion forming, injection forming, or the like.

According to the present invention, TiN fine particles having the above-mentioned predetermined shape, size and density can be deposited and dispersed into the hard particles by firing the obtained formed body under the following firing conditions.

That is, when Mn is not contained, in the interest of manufacture of the cermet having the above structure, the firing is preferably carried out under the following conditions (a) to (d): (a) Temperature is increased at 0.1°C/min to 3°C/min from a first firing temperature of 1100 to 1200°C to a second firing temperature of 1300°C to 1400°C, under the atmosphere having a nitrogen partial pressure of 200 to 900 kPa. (b) Then, when reached the second firing temperature, the atmospheric gas within a firing furnace is evacuated for maintaining vacuum atmosphere, or the gas entering and exiting from the firing furnace are stopped after evacuation, thereby producing autogeneous atmosphere (nitrogen partial pressure of 2 kPa or below), and the temperature is increased at a rate of 5°C/min to 15°C/min from the second firing temperature to a third firing temperature of 1450 to 1600°C. (c) This firing temperature is retained for 1 to 2 hours while retaining the atmosphere of (b). (d) The temperature is decreased in atmosphere having a nitrogen partial pressure of 0.01 to 100 kPa.

On the other hand, when Mn is added, the firing procedure includes the following steps (a') to (g'), which are carried out sequentially. In step (a'), temperature is increased under vacuum from room temperature to 1200°C. In step (b'), the temperature is increased under vacuum at a temperature rising rate of 0.1 to 2°C/min from 1200°C to a firing temperature of 1330°C to 1380°C (referred to as "temperature T₁"). In step (c'), at the temperature T₁, the atmosphere within the firing furnace is changed into an inert gas atmosphere of 30 to 2000 Pa, and the temperature is increased at a temperature rising rate of 4 to 15°C/min from the temperature T₁ to a firing temperature of 1450°C to 1600°C (referred to as "temperature T₂"). In step (d'), the inert gas atmosphere of 30 to 2000 Pa is retained at the temperature T₂ for 0.5 to 2 hours. In step (e'), while retaining this firing temperature, the atmosphere within the furnace is changed into vacuum atmosphere and retained for 30 to 60 minutes. In step (f'), vacuum cooling is carried out at a cooling rate of 5 to 15°C/min from the temperature T₂ to 1100°C. In step (g'), when lowered to 1100°C, rapid cooling is carried out by admitting inert gas at a gas pressure of 0.1 MPa to 0.9 MPa.

### Example 1

Using TiCN powder, TiN powder, ZrC powder, VC powder, TaC powder, MoC powder, NbC powder, WC powder, Ni powder, Co powder, solid solution powder of Ni and Co, and powder made by applying a mixed plating of Co and Ni onto the surface of the TiCN powder, as shown in Table 1, these powders were blended into ingredient compositions as shown in Table 1, respectively. This was then wet mixed with water, and 3% by mass of paraffin was added and mixed together by using a ball mill and carbide balls made of stainless steel. Thereafter, this mixed powder was press-formed into CNMG120408 at 200 MPa. Then, under vacuum, the temperature was increased up to 1200 °C (the first firing temperature) at 10°C/min, and the interior of the firing furnace was increased up to a gas pressure p₁ shown in Table 2, and the temperature was increased up to 1300 °C (the second firing temperature) at 0.8°C/min. Subsequently, the interior of the firing furnace was set to a gas pressure p₂ shown in Table 2 under vacuum or in the autogeneous atmosphere, and the temperature was increased at 8°C/min up to the firing temperature (the third firing temperature) shown in Table 2. This was fired at this firing temperature for one hour and then cooled under the conditions shown in Table 2.

The obtained sintered body surface was processed with a diamond whetstone, and the cutting performance thereof was evaluated under the following conditions. With respect to individual samples, their respective hard particles were observed through the transmission electron microscope (TEM), and it was confirmed whether or not the neck portion was formed between the hard particles, and whether or not the binder phase layer existed at the neck portion forming part. The results are shown in Table 2 or Table 3.
Cutting Conditions 1 (Wear Resistance Test)
   Cutting speed: 250m/min
   Feed rate: 0.25mm/rev (+0.05mm/rev)
   Depth of cut: 2.0mm
   Work material: SCM435
   Cutting state: Wet (emulsion)
   Evaluation item: Cutting time (min) elapsed until the amount of wear in the flank face reached 0.2mm
Cutting Conditions 2 (Fracture Resistance Test)
   Cutting speed: 150m/min
   Feed rate: 0.05mm/rev (+0.05mm/rev)
   Depth of cut: 2.0mm
   Work material: S45C
   Cutting state: Wet (emulsion)
   Evaluation item: The number of shocks counted until fracture occurred

**[Table 1]**

| Sample No. | Material composition (% by mass) ¹⁾ | | | | | | | | | | |
|---|---|---|---|---|---|---|---|---|---|---|---|
| | TiCN | Ni | Co | WC | TiN | TaC | NbC | MoC | ZrC | VC | Ru,Re |
| 1 | The rest | 2 | 2 | 18 | 10 | 2 | 12 | 0 | 3 | 1 | Ru2 |
| 2 | The rest | 1 | 4 | 18 | 13 | 0 | 15 | 0 | 1 | 0 | Re2 |
| 3 | The rest | 3 | 6 | 19 | 13 | 0 | 10 | 0 | 3 | 1 | 0 |
| 4 | The rest | 3/5 | | 15 | 13 | 5 | 10 | 0 | 3 | 1 | 0 |
| 5 | The rest | 3 | 7 | 14 | 13 | 2 | 6 | 2 | 1 | 2 | 0 |
| 6 | The rest | 3 | 6 | 18 | 0 | 1 | 1 | 1 | 1 | 1 | Re3 |
| 7 | The rest | 3/8 | | 15 | 12 | 0 | 9 | 1 | 1 | 2 | Ru5 |
| 8 | The rest | 4 | 6 | 15 | 16 | 10 | 5 | 3 | 3 | 0 | 0 |
| 9 | The rest | 4 | 6 | 15 | 14 | 10 | 2 | 1 | 3 | 3 | 0 |
| 10 | The rest | 3 | 6 | 38 | 0 | 1 | 1 | 0 | 1 | 1 | 0 |
| 11 | The rest | 4 | 9 | 13 | 13 | 3 | 5 | 1 | 1 | 2 | 0 |
| * 12 | The rest | 1 | 2 | 20 | 12 | 1 | 13 | 2 | 2 | 1 | 0 |
| * 13 | The rest | 4 | 12 | 10 | 25 | 5 | 0 | 3 | 2 | 2 | 0 |
| * 14 | The rest | 4 | 6 | 5 | 16 | 10 | 15 | 1 | 3 | 0 | 0 |
| * 15 | The rest | 2 | 8 | 10 | 16 | 11 | 10 | 0 | 2 | 1 | 0 |
| * 16 | The rest | 1 | 3 | 0 | 19 | 0 | 7 | 0 | 3 | 5 | 0 |
| * 17 | The rest | 1 | 3 | 11 | 16 | 0 | 10 | 1 | 3 | 0 | 0 |
| * 18 | The re rest : 3/5 | | | 18 | 13 | 0 | 15 | 0 | 1 | 0 | 0 |

| | | | | | | | | | | | |
|---|---|---|---|---|---|---|---|---|---|---|---|
| The samples marked "*" are out of the scope of the present invention. 1)Material composition : As to Sample Nos. 4 and 7, solid solution powder material containing Ni and Co was used. As to Sample No. 18, TiCN powder material made by applying a plating of Ni and Co onto the surface was used. | | | | | | | | | | | |

**[Table 2]**

| Sample No. | Firing conditions | | | Presence or absence of neck | | |
|---|---|---|---|---|---|---|
| | Nitrogen partial pressure P₁ (kPa) | Nitrogen partial pressure P₂ (kPa) | Firing temperature (°C) | Lₐ | L_{c} | L_{c}/Lₐ |
| 1 | 200 | 0.8 | 1500 | 0.15 | 0.08 | 0.53 |
| 2 | 700 | 0.8 | 1600 | 0.13 | 0.06 | 0.46 |
| 3 | 400 | 2 | 1550 | 0.19 | 0.09 | 0.47 |
| 4 | 400 | 1 | 1575 | 0.34 | 0.13 | 0.38 |
| 5 | 500 | 0.1 | 1575 | 0.31 | 0.15 | 0.48 |
| 6 | 400 | 0.3 | 1550 | 0.38 | 0.12 | 0.32 |
| 7 | 400 | 0.1 | 1575 | 0.54 | 0.23 | 0.43 |
| 8 | 800 | 0.7 | 1550 | 0.52 | 0.31 | 0.60 |
| 9 | 900 | 1 | 1600 | 0.55 | 0.17 | 0.31 |
| 10 | 400 | 1 | 1550 | 0.70 | 0.21 | 0.30 |
| 11 | 200 | 1 | 1550 | 0.90 | 0.58 | 0.64 |
| * 12 | 100 | 0.1 | 1575 | 0.49 | 0.38 | 0.78 |
| * 13 | 500 | 0.01 | 1550 | 0.56 | 0.17 | 0.30 |
| * 14 | 1500 | 0.01 | 1550 | 0.51 | 0.25 | 0.49 |
| * 15 | 0.8 | 0.1 | 1450 | 1.03 | 0.28 | 0.27 |
| * 16 | 400 | 1 | 1620 | 1.38 | 0.88 | 0.64 |
| * 17 | 500 | 500 | 1575 | 1.19 | 0.31 | 0.26 |
| * 18 | 0.9 | 1 | 1500 | 0.95 | 0.22 | 0.23 |

| | | | | | | |
|---|---|---|---|---|---|---|
| The samples marked "*" are out of the scope of the present invention. | | | | | | |

**[Table 3]**

| Sample No. | Thickness of binder phase layer (nm) | L_{ct}/Lₚ (%) | TiN fine particles (µm) | Wear resistance Cutting time (min) | Fracture resistance Number of shocks (times) |
|---|---|---|---|---|---|
| 1 | 0.8 | 48 | 0.15 | 83 | 40500 |
| 2 | 2.5 | 35 | 0.21 | 71 | 39600 |
| 3 | 1.3 | 42 | 0.29 | 45 | 41200 |
| 4 | 1.2 | 38 | 0.18 | 48 | 46200 |
| 5 | 1.6 | 46 | 0.34 | 41 | 42700 |
| 6 | 1.5 | 36 | 0.24 | 69 | 43800 |
| 7 | 1.1 | 32 | 0.37 | 79 | 47300 |
| 8 | 2.8 | 28 | 0.23 | 40 | 35100 |
| 9 | 0.12 | 22 | - | 36 | 32900 |
| 10 | 0.7 | 25 | - | 40 | 33600 |
| 11 | 0.32 | 14 | - | 38 | 34100 |
| * 12 | Nothing | - | - | 34 | 28300 |
| * 13 | 5.0 | 18 | - | 26 | 31000 |
| * 14 | 4.5 | 29 | - | 28 | 28900 |
| * 15 | Nothing | - | 0.27 | 21 | 27800 |
| * 16 | Nothing | - | 0.36 | 30 | 25300 |
| * 17 | 5.5 | 57 | - | 28 | 26400 |
| * 18 | 10 | 45 | - | 25 | 29000 |

| | | | | | |
|---|---|---|---|---|---|
| The samples marked "*" are out of the scope of the present invention. | | | | | |

The followings will be noted from Tables 1 to 3. In Sample No. 12 in which the nitrogen partial pressure was lower than 200 kPa in the firing atmosphere of 1200°C to 1300°C, and in Sample No. 16 in which the firing temperature was higher than 1600°C, the neck portion was observed, however, no binder phase layer was formed at the neck portion, resulting in poor fracture resistance. In Sample No. 13 in which the contents of Co and Ni were large, the hardness and plastic deformation resistance thereof were low, and the wear resistance thereof was lowered. In Sample No. 14 in which the nitrogen partial pressure exceeded 900 kPa in the firing atmosphere of 1200°C to 1300°C, and in Sample No. 17 in which the nitrogen partial pressure exceeded 2 kPa in the firing atmosphere of 1300°C to the firing temperature, the thickness of the binder phase layer exceeded 3 nm and thus the wear resistance was deteriorated. In Sample No. 15 in which the firing temperature was lower than 1500°C, and in Sample No. 18 using the TiCN raw material powder whose surface was subjected to the composite plating of Co and Ni, the neck portion having a ratio L_{c}/Lₐ of not less than 0.3 was not formed, and these samples had low wear resistance, low plastic deformation resistance and low fracture resistance.

On the contrary, all the Samples Nos. 1 to 11 having the crystal structure according to the present invention had excellent characteristics in terms of wear resistance, plastic deformation resistance and fracture resistance.

### Example 2

The raw material powders as shown in Table 4 were used to blend into the ingredient compositions as shown in Table 4, and cermets were obtained by mixing and press forming similarly to Example 1, followed by firing under the same conditions as Example 1, except for the firing conditions shown in Table 5. These obtained cermets were processed similarly to Example 1, and their cutting performances were evaluated. With respect to individual samples, their respective hard particles thereof were observed through the transmission electron microscope (TEM), and it was confirmed whether or not the neck portion was formed between the hard particles, and whether or not the binder phase layer existed at the neck portion forming part. The results are shown in Table 6.

**[Table 4]**

| Sample No. | Material composition (% by mass) | | | | | | | | | | | |
|---|---|---|---|---|---|---|---|---|---|---|---|---|
| | | Ni | Co | WC | TiN | TaC | NbC | MoC | ZrC | VC | Ru,Re | MnCO₃ |
| 19 | The rest | 2 | 2 | 18 | 10 | 2 | 12 | 0 | 3 | 1 | Ru 1 | 0.5 |
| 20 | The rest | 1 | 4 | 18 | 13 | 0 | 15 | 0 | 1 | 0 | Re 0.3 | 1.5 |
| 21 | The rest | 3 | 6 | 19 | 13 | 0 | 10 | 0 | 3 | 1 | 0 | 1.0 |
| * 22 | The rest | 1 | 3 | 15 | 13 | 5 | 10 | 0 | 3 | 1 | 0 | 2.0 |

| | | | | | | | | | | | | |
|---|---|---|---|---|---|---|---|---|---|---|---|---|
| The sample marked "*" is out of the scope of the present invention. | | | | | | | | | | | | |

**[Table 5]**

| Sample No. | Firing conditions | | | | | | | | | | | | | | | | |
|---|---|---|---|---|---|---|---|---|---|---|---|---|---|---|---|---|---|
| | Step (b') | | | | Step (c') | | | | Step (d') | | | Step (e') | | Step (f') | | Step (g') | |
| | Temperature rising rate r₁ (°C/min) | Firing temperature T₁ (°C) | Firing atmosphere | | Temperature rising rate r₂ (°C/min) | Firing temperature T₂ (°C) | Firing atmosphere | | Firing atmosphere | | Firing time t₁ (hr) | Firing atmosphere | Firing time t₂ (hr) | Cooling rate r₃ (°C/min) | Firing atmosphere | Firing atmosphere | |
| 19 | 1.2 | 1350 | Vacuum | | 5 | 1480 | N₂ | 300Pa | N₂ | 300Pa | 0.5 | Vacuum | 0.5 | 7 | Vacuum | N₂ | 0.1 |
| 20 | 0.7 | 1345 | Vacuum | | 7 | 1500 | Ar | 200Pa | Ar | 200Pa | 0.5 | Vacuum | 1.0 | 10 | Vacuum | Ar | 0.1 |
| 21 | 0.4 | 1360 | Vacuum | | 8 | 1500 | N₂ | 800Pa | N₂ | 800Pa | 1.0 | Vacuum | 1.0 | 5 | Vacuum | N₂ | 0.2 |
| * 22 | 1.0 | 1350 | N₂ | 800Pa | 12 | 1575 | N₂ | 1000Pa | N₂ | 1000Pa | 0.5 | - | | 7 | Vacuum | N₂ | 0.6 |

| | | | | | | | | | | | | | | | | | |
|---|---|---|---|---|---|---|---|---|---|---|---|---|---|---|---|---|---|
| The sample marked "*" is out of the scope of the present invention. | | | | | | | | | | | | | | | | | |

**[Table 6]**

| Sample No. | Thickness of binder phase layer (nm) | L_{ct}/Lₚ (%) | TiN fine particles (µm) | Hard phase (% by mass) | | Binder phase (% by mass) | | Wear resistance Cutting time (min) | Fracture resistance Number of shocks (times) |
|---|---|---|---|---|---|---|---|---|---|
| | | | | Mn | W | Mn | W | | |
| 19 | 1.5 | 49 | 0.21 | 0.0054 | 2.84 | 0.79 | 14.6 | 85 | 46800 |
| 20 | 2.8 | 47 | 0.34 | 0.0040 | 4.67 | 0.64 | 16.1 | 74 | 47900 |
| 21 | 1.8 | 48 | 0.28 | 0.0062 | 3.95 | 0.58 | 20.4 | 83 | 47100 |
| * 22 | 5.1 | 33 | 0.25 | 0.002 | 0.84 | 0.31 | 15.8 | 61 | 35600 |

| | | | | | | | | | |
|---|---|---|---|---|---|---|---|---|---|
| The sample marked "*" is out of the scope of the present invention. | | | | | | | | | |

As apparent from Tables 4 to 6, in Sample No. 22 in which the firing atmosphere in the step (b) was the inert gas atmosphere instead of vacuum, and the firing was carried out without passing through the step (e), both wear resistance and fracture resistance were low in the cutting evaluations. On the contrary, all the Samples Nos. 19 to 21 having the crystal structure according to the present invention had excellent characteristics in terms of wear resistance, plastic deformation resistance and fracture resistance.

### BRIEF DESCRIPTION OF THE DRAWINGS

Fig. 1(a) is a transmission electron micrograph (TEM image) in an arbitrary portion of the cermet of the invention; Fig. 1(b) is a transmission electron micrograph (TEM image) in an arbitrary portion of a conventional cermet;
Fig. 2 is an enlarged photograph of important parts of Fig. 1(a); and
Figs. 3(a) to 3(c) are charts showing composition analysis results by dispersive X-ray spectroscopic analysis with respect to point a, point b, and point c in Fig. 2.

### Description of Reference Numerals

1: cermet
2 (2a, 2b): hard particles
3: binder phase.
4: neck portion
5: binder phase layer
6: joint portion

## Claims

1. A cermet formed by binding hard particles comprising one or more kinds of substances selected from carbides, nitrides and carbonitrides selected from among metals in Groups 4, 5 and 6 of the periodic table, with a binder phase comprising at least one kind of element selected from Co and Ni, wherein there exists a portion where the hard particles are joined with each other by forming a neck portion through a binder phase layer having a thickness of 0.1 to 3 nm.

2. The cermet according to claim 1 wherein the ratio (L_{ct}/Lₚ) of a total length L_{ct} of the binder phase layer intervening the neck portion to a total outer circumferential length Lₚ of a plurality of the hard particles observed in a micrograph of a cross-sectional structure thereof is 0.1 or more.

3. The cermet according to claim 1 wherein the hard particles have an average particle diameter of 0.1 to 0.9 µm.

4. The cermet according to claim 1 wherein TiN fine particles exist in the interior of the hard particles.

5. The cermet according to claim 1 wherein Ru or Re is contained in a proportion of 0.1 to 5% by mass.

6. The cermet according to claim 1 wherein Mn is contained in a proportion of 0.5 to 1% by mass of in a binder phase, and in a proportion of 0.004 to 0.01% by mass of Mn in a hard phase.
